# EUROPEAN PATENT APPLICATION

(11) **EP 3 249 614 A1**
(43) Date of publication of application: **29.11.2017**
(21) Application number: 15878956.0
(22) Date of filing: 22.12.2015
(51) Int. Cl.: G06T 17/05, G06T 15/00, G09B 29/00, G09B 29/10

(54) **THREE-DIMENSIONAL MAP DISPLAY SYSTEM**

(30) Priority: 20.01.2015 JP 2015008523
(71) Applicant: Geo Technical Laboratory Co., Ltd., Fukuoka-shi, Fukuoka 812-0013 (JP)
(72) Inventor: UCHINOUMI Masashi, Fukuoka-shi Fukuoka 812-0013 (JP); TESHIMA Eiji, Fukuoka-shi Fukuoka 812-0013 (JP); FUKUSHIMA Yuki, Fukuoka-shi Fukuoka 812-0013 (JP)
(74) Representative: Eder Schieschke & Partner mbB
(86) International application number: PCT/JP2015/085754
(87) International publication number: WO 2016/117267

(57) **Abstract**

[Problem]

To display a three-dimensional map over the whole display area with a relatively light load. [Solution] A high-definition model database 17 for expressing a planimetric feature in detail and a simple model database 16 for simple expression are prepared as map databases. When displaying a three-dimensional map, a simple three-dimensional map is drawn in a whole display area using the simple model, and for a high-definition model drawing range within a prescribed distance from a viewpoint, a high-definition three-dimensional map is drawn in another layer using the high-definition model. The high-definition three-dimensional map is superposed in front of the simple three-dimensional map, and the two are then combined together to cause the three-dimensional map to be displayed. At this time, the high-definition three-dimensional map near the border with the high-definition model drawing range is drawn translucently, and both are thereby merged without a sense of incongruity. Furthermore, when there is a viewpoint near the border where the high-definition model is provided, the whole of the high-definition model is drawn translucently, thereby making it possible for the high-definition three-dimensional map to be gradually rendered transparent and transitioned to the display of only the simple three-dimensional map without a sense of incongruity.

## Description

### [Technical Field]

The present invention relates to a three-dimensional map display system which displays a three-dimensional map by combining a plurality of map models with different accuracy of features.

### [Background Art]

A three-dimensional map representing features such as a building in a three-dimensional manner is often used as an electronic map used in a navigation device, a computer screen or the like. The three-dimensional map is generally displayed by drawing a three-dimensional model in a three-dimensional manner by means of perspective projection or the like.

Here, the three-dimensional map includes a large number of features, and since a ground surface is represented by polygons, the number of the three-dimensional models becomes huge, and a load of drawing processing of the three-dimensional map can become extremely high. Particularly, when a bird' s-eye view seen from a high viewpoint is to be drawn, a display range of the map becomes wide and thus, the processing load of display can become extremely high.

In order to reduce such processing load, a plurality of pieces of map data with different detail degrees is used at the same time in map display of a three-dimensional map or particularly a bird's-eye view. In both Patent Literatures 1 and 2, for example, such a technology is disclosed that, when a three-dimensional bird' s-eye map is to be displayed, a display region of the map is vertically divided into two areas, a lower-side area close to a viewpoint is displayed by using detailed map data, while an upper area far away from the viewpoint is displayed by using wide-area map data coarser than that. Moreover, Patent Literature 3 discloses a technology in which a bird' s-eye view of a road or the like is drawn by using two-dimensional map data, and a three-dimensional view obtained by perspective projection of a three-dimensional model of a building is superimposed in display.

### [Citation List]

### [Patent Literature]

Patent Literature 1: Japanese Patent No. 4422125
Patent Literature 2: Japanese Patent No. 3362533
Patent Literature 3: Japanese Unexamined Patent Application Publication No. 2003-232639

### [Summary of Invention]

### [Problems to be Solved by Invention]

However, none of the prior-art technologies could display a three-dimensional map without a sense of discomfort on an entire display area.

In the technologies described in Patent Literatures 1 and 2, for example, disturbance in display caused by inconsistency between data, display processing by or graphics engine, and the like occurs at a boundary portion of a plurality of maps with different detail degrees, which impairs appearance of the map. Moreover, in the method of vertically dividing the display area as in the technologies disclosed in Patent Literatures 1 and 2, when a building drawn three-dimensionally is present in the vicinity of the boundary, the building is divided on the display, which causes a sense of discomfort and impairs the appearance of the map. In the method of Patent Literature 3, if the number of buildings to be drawn as three-dimensional images increases, a load for drawing the three-dimensional map becomes huge in the end.

Such problems are not specific only to the bird' s-eye view but can occur also in a case of a driver's view drawing a three-dimensional map from a low viewpoint as long as a plurality of pieces of map data is used. Moreover, this is a common problem not only in a case where the map data is stored by the unit of mesh but also in a case where a map is displayed by using a plurality of pieces of map data at the same time.

The present invention is made in view of such problems and has an object to display a three-dimensional map without a sense of discomfort in an entire display area with a relatively light load.

### [Means for Solving the Problems]

The present invention can be configured as a three-dimensional map display system for displaying a three-dimensional map, comprising:
a detail model database storing a detail model which is map data with high accuracy of features included in a map;
a simple model database storing a simple model which is map data with accuracy of the features included in the map lower than that in the detail model;
a map display unit for displaying a three-dimensional map seen from a designated viewpoint and a line-of-sight direction by referring to the detail model database and the simple model database, wherein
the map display unit comprises:
   a detail three-dimensional map drawing unit for assuming a range within a predetermined distance in a line-of-sight direction from the viewpoint is a detail model drawing range, and drawing by using the detail model a detail three-dimensional map, which is a three-dimensional map with high accuracy of the features, in the detail model drawing range ;
   a simple three-dimensional map drawing unit for drawing by using the simple model a simple three-dimensional map, which is a three-dimensional map with accuracy of the features lower than that of the detail three-dimensional map, in a range set to include a range where the detail three-dimensional map is not drawn; and
   an image-synthesizing unit for displaying the former superimposed in front of the latter, and displaying both.

As described above, the present invention comprises the detail model and the simple model.

The detail model is map data with high accuracy of the features, and it is data for displaying a highly realistic three-dimensional map in which, for example, a shape and a texture of a surface of a building are prepared or data for expressing a white line is prepared for a road. However, a degree of the reality can be set arbitrarily, and thus a model with an accurate shape or texture does not necessarily have to be prepared for all the buildings, or the white line does not have to be prepared for a road. It is only necessary that the map data has relatively high accuracy of the features as compared with the simple model which will be described later.

On the other hand, the simple model is map data with relatively low accuracy of the features. For the building, for example, a columnar simple shape formed by translating a building frame representing a planar shape in a height direction in accordance with a height of each building may be used, and a typical texture representing an appearance of a building may be pasted on a surface of the columnar simple shape. For a road, too, a model in which the road is expressed with a polygon can be employed, in which a width corresponding to a road width is applied to data prepared simply as a zigzag line. Moreover, two-dimensional map database may be used as the simple model. Since it is only necessary that the simple model is that with relatively low accuracy of the features as compared with the detail model, it can take various modes, not limited to the aforementioned mode, such that a building is represented by a wireframe and a texture is omitted, for example. Moreover, some of the buildings to be displayed three-dimensionally may be thinned out.

In the present invention, the detail three-dimensional map is drawn for a detail model drawing range close to a viewpoint, while the simple three-dimensional map is drawn for the other ranges. Thus, a load for displaying a three-dimensional map can be reduced as compared with a case where the detail three-dimensional map is drawn for the entirety.

Moreover, since the detail three-dimensional map draws a range defined as a target within a predetermined distance from the viewpoint in a three-dimensional space, buildings present in that range are generally drawn finely. Therefore, a sense of discomfort in the vicinity of a boundary between the detail three-dimensional map and the simple three-dimensional map can also be reduced.

As described above, in the present invention, by partitioning the range using the detail model and the range the simple model within the three-dimensional space, display of a three-dimensional map without a sense of discomfort can be realized while a load of drawing can be reduced by using a plurality of models.

In the present invention, a screen of a computer or a navigation device and a screen of a mobile terminal such as a smart phone, a mobile phone, and a tablet can be used as a device for displaying a map.

A viewpoint and a line-of-sight direction may be designated by various methods such as a method of manual designation by a user and a method of designation by an attitude or a direction of a mobile terminal. As an alternative method, it may be configured to be set automatically on the basis of a route to be guided and a current position in a process of route guidance.

In the three-dimensional map display system of the present invention:
the detail three-dimensional map drawing unit may draw the detail three-dimensional map in a translucent manner within a transparent drawing range which is set in the vicinity of a boundary of the detail model drawing range; and
the simple three-dimensional map drawing unit may draw the simple three-dimensional map so as to include the transparent drawing range.

By configuring as above, a translucent detail three-dimensional map is superimposed and drawn on the simple three-dimensional map within the transparent drawing range in the vicinity of the boundary between the detail three-dimensional map and the simple three-dimensional map. Therefore, in the entire displayed three-dimensional map, the both are visually recognized to be integrated without a sense of discomfort, whereby appearance of the three-dimensional map can be improved.

The transparent drawing range can be set arbitrarily in view of the aforementioned visual effects including its area and shape. Moreover, the area of the transparent drawing range does not have to be fixed for all the regions but may be changed depending on a region such that a range in translucent drawing is narrowed in an urban area with many buildings while it is widened in a rural area with fewer buildings, for example. Moreover, when the three-dimensional map display of the present invention is to be used for route guidance or the like, the transparent drawing range may be changed in accordance with a moving speed of its own vehicle position.

Moreover, transmittance of translucency can be set arbitrarily. It may be uniform transmittance within a range where drawing is made translucently, or the transmittance may be changed within the transparent drawing range. By employing a mode in which the closer it is to the boundary of the detail model drawing range in the transparent drawing range, the higher the transmittance becomes, for example, the visual effect can be exerted that the detail three-dimensional map moves to the simple three-dimensional map more naturally.

Moreover, in the three-dimensional map display system of the present invention,
the simple three-dimensional map drawing unit may draw the simple three-dimensional map on the entire display area of the three-dimensional map.

By configuring as above, it is only necessary to draw the simple three-dimensional map without considering the range where the detail three-dimensional map is drawn and thus, a setting load of the range where the simple three-dimensional map is drawn can be reduced.

In the three-dimensional map display system of the present invention:
a detail model prepared area where the detail model is prepared and a detail model non-prepared area where it is not prepared may be mixed.

By configuring as above, a load for preparing the detail model can be also reduced. The detail model prepared area can be set arbitrarily. For example, the detail model may be prepared for an urban area with a high demand for more realistic display of a building or the like, while the detail model is not prepared but only a simple model is prepared for a suburban or rural area.

In the case where the detail model prepared area and the detail model non-prepared area are mixed as described above,
when a distance from the viewpoint in the line-of-sight direction to a boundary of the detail model prepared area is less than or equal to a first predetermined value, the detail three-dimensional map drawing unit or the image-synthesizing unit may display the entire detail three-dimensional map with transmittance increased as the viewpoint gets closer to the boundary.

In the vicinity of the boundary of the detail model prepared area, the detail three-dimensional map cannot be displayed any more for the entire detail model drawing range originally scheduled depending on the viewpoint. Such state is considered in the aforementioned mode, and if the viewpoint is located in the vicinity of the boundary of the detail model prepared area, the display is made with increased transmittance for the entire detail three-dimensional map. By configuring as above, even if the detail three-dimensional map cannot be displayed in a sufficient range any more, a state of natural transition to the simple three-dimensional map can be represented. This mode is particularly useful when the three-dimensional map is displayed while the viewpoint is being moved.

Moreover,
the detail three-dimensional map drawing unit or the image-synthesizing unit may not display the detail three-dimensional map when the distance from the viewpoint in the line-of-sight direction to the boundary of the detail model prepared area is less than or equal to a second predetermined value smaller than the first predetermined value.

This is a mode in which, when the viewpoint further gets closer to the boundary of the detail model prepared area, the detail three-dimensional map is not displayed. By configuring as above, transition from the detail three-dimensional map to the simple three-dimensional map can be realized with less sense of discomfort.

Whether regions for which the detail model is prepared are scattered or not, synthesis of images in the present invention can be performed in various ways.

A first method is a method in which:
the detail three-dimensional map drawing unit and the simple three-dimensional map drawing unit draw the detail three-dimensional map and the simple three-dimensional map on different layers; and
the image-synthesizing unit arranges the layer on which the detail three-dimensional map is drawn in front of the layer on which the simple three-dimensional map is drawn and performs synthesis.

In this mode, since the detail three-dimensional map and the simple three-dimensional map are drawn on the different layers, synthesis in a state where the detail three-dimensional map is drawn in front of the simple three-dimensional map can be realized easily. Moreover, there is advantage that various operations to the three-dimensional map such as not displaying the detail three-dimensional map in accordance with the user's operation can be easily realized.

A second method is a method in which:
the image-synthesizing unit:
   allows the simple three-dimensional map drawing unit to draw the simple three-dimensional map;
   deletes a depth buffer storing a distance from the viewpoint to each point in the simple three-dimensional map; and
   then, allows the detail three-dimensional map drawing unit to draw the detail three-dimensional map.

In three-dimensional graphics display in general, in order to realize hidden line removal for controlling drawing of a polygon in accordance with whether it is visually recognizable from the viewpoint, a distance from the viewpoint to each point on the polygon, that is, a depth is usually recorded in some method while display processing is executed. In the aforementioned mode, this depth buffer is deleted after the simple three-dimensional map is drawn and thus, the simple three-dimensional map becomes a simple two-dimensional image at this point of time. Therefore, by directly drawing the detail three-dimensional map on this, the three-dimensional map in which the detail three-dimensional map is superimposed in front of the simple three-dimensional map can be naturally realized.

In the present invention, it is not necessary to include all the aforementioned various features but a part thereof may be omitted or combined in configuration as appropriate.

In addition, the present invention may be configured as a method of displaying a three-dimensional map in which the three-dimensional map is displayed by means of a computer, or as a computer program for allowing the computer to execute the displaying process described above. Moreover, it may be configured as a computer readable recording medium which stores such a computer program.

### [Brief Description of the Drawings]

[Fig. 1] Fig. 1 is an explanatory view illustrating configuration of a navigation device.
[Fig. 2] Fig. 2 is a flowchart of a route guidance processing.
[Fig. 3] Fig. 3 is a flowchart of the three-dimensional map display processing.
[Fig. 4] Fig. 4 is an explanatory view illustrating a setting method of a synthesis condition.
[Fig. 5] Fig. 5 is an explanatory view illustrating a method of synthesizing images.
[Fig. 6] Fig. 6 is an explanatory view illustrating a display example of a simple three-dimensional map.
[Fig. 7] Fig. 7 is an explanatory view illustrating a display example of a three-dimensional map in which a detail three-dimensional map is superimposed.
[Fig. 8] Fig. 8 is an explanatory view illustrating a transition screen when leaving an area where the detail model is prepared.
[Fig. 9] Fig. 9 is an explanatory view illustrating a transition screen when entering the area where the detail model is prepared.
[Fig. 10] Fig. 10 is a flowchart of a three-dimensional map display processing as a variation.

### [Description of Embodiment]

### [Embodiment 1]

Regarding the present invention, in a navigation device, an embodiment configured as a three-dimensional map display system displaying a three-dimensional map on a display during route guidance will be described. In this embodiment, a vehicle-mount navigation device will be described as an example, but the three-dimensional map display system of the present invention can be also configured as a portable navigation device using a mobile terminal such as a smart phone, a mobile phone, and a tablet terminal in addition to that. Moreover, it can be configured as a system for displaying the three-dimensional map on a display of a computer or the like statically or dynamically regardless of route search or route guidance.

Moreover, in this embodiment, a system operating in a stand-alone manner is exemplified, but it may be configured as a system storing each database or the like illustrated in the figure in a server and connecting the server and the navigation device via a network. It also applies to a case where a mode other than the navigation device is employed.

### A. System configuration:

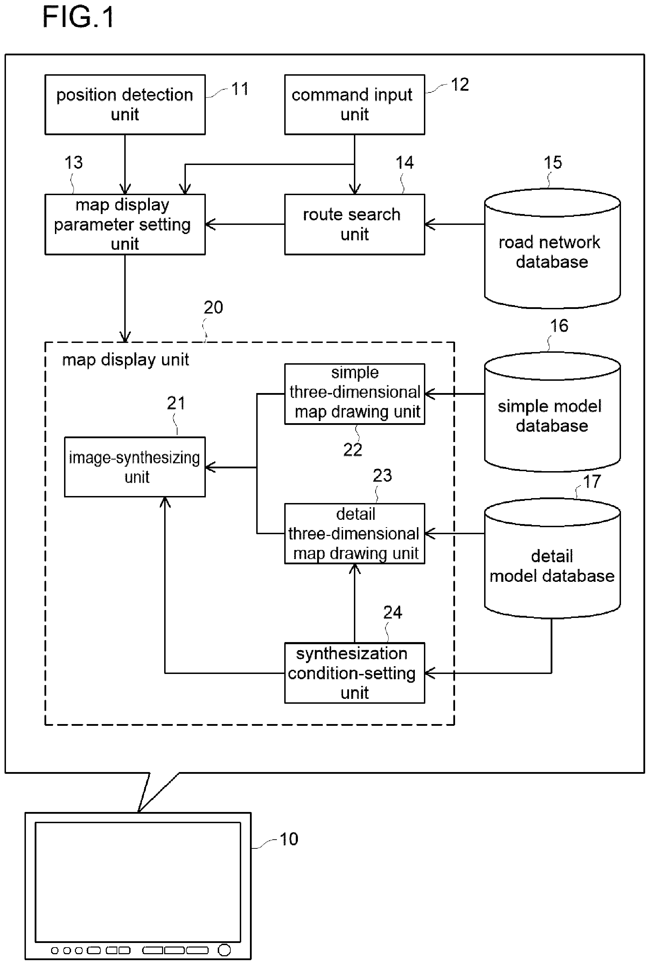

Fig. 1 is an explanatory view illustrating configuration of a navigation device 10. The navigation device 10 is a vehicle-mount device for guiding a route from a departure place to a destination designated by a user.

The navigation device 10 has configuration as a computer including a CPU, a RAM, a ROM and the like therein and has various illustrated functional blocks. These functional blocks can be configured in a software manner by installing computer programs realizing the respective functions but a part of or the whole of them may be configured in a hardware manner. Contents of each of the functional blocks will be described below.

A command input unit 12 receives an instruction from the user through an operation to the navigation device 10. The instructions include those for designating the departure place, the destination for route search and a display range (scale) for displaying a map, for example.

A road network database 15 stores network data for the route search representing the road with a link and a node.

A route search unit 14 searches a route from the designated departure place to destination by referring to the road network database 15. As a method of route search, known various methods such as a Dijkstra method can be employed.

A position detection unit 11 detects a position of a vehicle on which the navigation device 10 is mounted by using a GPS (Global Positioning System) or the like.

A map display parameter setting unit 13 sets parameters for displaying a three-dimensional map on the basis of various types of information. It can set a viewpoint for perspective projection on the basis of the position of the vehicle detected by the position detection unit 11, for example. Moreover, it can set a line-of-sight direction for the perspective projection on the basis of the route searched by the route search unit 14 and the position of the vehicle. Furthermore, it can be further configured that a display scale may be changed in accordance with the instruction from the user or a height of the viewpoint or an inclination angle is made changeable. The display parameter set as above is delivered to a map display unit 20.

As the functional block for displaying the three-dimensional map, the navigation device 10 includes a simple model database 16, a detail model database 17, and the map display unit 20. These functional blocks are configuration corresponding to the three-dimensional map display system in the present invention.

The detail model database 17 stores three-dimensional map data representing a three-dimensional shape of a feature. This three-dimensional map data stores textures representing the three-dimensional shapes of major buildings substantially accurately and representing appearances of their surfaces. Regarding roads, data for representing white lines is also stored. However, it is not necessary to store such detail three-dimensional models for all the buildings and roads, and simple shapes and appearances may be applied for a part of the buildings to such a degree that reality is not undermined. The three-dimensional map data stored in the detail model database 17 is called a detail model in this embodiment in some cases.

The detail model does not have to be provided for all the areas but may be narrowed to preparation only for urban areas. In this embodiment, description will be made below by assuming that the detail model is prepared in a scattered manner as described above. The area where the detail model is prepared is called a detail model prepared area, while an area where it is not prepared is called a detail model non-prepared area.

The simple model database 16 stores map data simpler than the detail model. In this embodiment, it is assumed that two-dimensional map data is used. A planar shape, that is, a building frame is stored for a building, and a zigzag line data is stored for a road. In this embodiment, the map data stored in the simple model database 16 is called a simple model in some cases. In this embodiment, though the two-dimensional map data is used as the simple model as described above, the simple model is also data for displaying a three-dimensional map as will be described later.

As the simple model, three-dimensional map data storing a three-dimensional shape or the like of a building may be used. However, since the simple model is the map data with reality lower than that of the detail model, even if it is prepared as the three-dimensional map data, a building is not prepared with an accurate shape but with a simplified shape, and an appearance may be prepared by using a typical texture or the like. A white line of the road may be also omitted. The simple model is not prepared in the scattered manner as in the detail model but prepared over the entire area.

The map display unit 20 displays the three-dimensional map by using each data of the simple model database 16 and the detail model database 17. The map display unit 20 further includes the following functional blocks.

A simple three-dimensional map drawing unit 22 displays a three-dimensional map using a simple model stored in the simple model database 16. In this embodiment, as described above, the two-dimensional map data is stored as the simple model. A method of displaying a three-dimensional map by using such data is as follows. By rendering the two-dimensional map data to perspective projection, a three-dimensional bird's-eye view can be drawn. The simple three-dimensional map drawing unit 22 draws a road not with a fine zigzag line but with a thick zigzag line corresponding to a road width in order to improve reality of this bird' s-eye view. Moreover, major buildings are drawn three-dimensionally by a columnar shape generated by translation of a building frame representing a planar shape in a height direction in accordance with a height of each of the buildings. Textures representing typical windows, walls and the like are pasted onto the surface of the building. The three-dimensional map drawn as above is called a simple three-dimensional map in this embodiment. The simple three-dimensional map has a feature that drawing can be made with a light load.

When the simple three-dimensional map is to be drawn, a degree of simplification may be changed in accordance with a distance from the viewpoint. In an area relatively close to the viewpoint, for example, a road is drawn with a thickness as described above, while in an area far away by a predetermined distance or more, the road can be drawn by a line. Moreover, in such a distant area, three-dimensional drawing of a building may be omitted. Then, the drawing load of the simple three-dimensional map can be further reduced. In this embodiment, ups and downs on a ground surface are assumed to be drawn by reflecting three-dimensional coordinates even in the simple three-dimensional map. By configuring as above, a landscape such as a mountain can be loyally reproduced.

A detail three-dimensional map drawing unit 23 displays a three-dimensional map by perspective projection using the detail model stored in the detail model database 17. The three-dimensional map displayed as above is called a detail three-dimensional map in this embodiment.

In either of the simple three-dimensional map and the detail three-dimensional map, the viewpoint and the line-of-sight direction used for the perspective projection are set by the map display parameter setting unit 13. The viewpoint and the line-of-sight direction can be changed by the user's instruction.

In this embodiment, ranges where the simple three-dimensional map and the detail three-dimensional map are drawn are different. The simple three-dimensional map is drawn for the entire display area on the display of the navigation device 10 from the viewpoint to the line-of-sight direction. On the other hand, the detail three-dimensional map is drawn by using a detail model present in a range (this is called a detail model drawing range) from the viewpoint toward the line-of-sight direction by a predetermined distance (a distance in a depth direction is also called a depth). That is, the detail three-dimensional map is drawn only on a part of the display area of the navigation device 10.

Although the simple three-dimensional map can be also drawn with narrowed to a range where the detail three-dimensional map is not drawn, processing of determining a range of drawing the simple three-dimensional map can be omitted when drawing the entire display area. Also, drawing the entire display area provides advantage that an appearance of a three-dimensional map in general can be maintained even if transmittance of the detail three-dimensional map is variously changed.

An image-synthesizing unit 21 superimposes the detail three-dimensional map in front of the simple three-dimensional map and displays it. By configuring as above, such a three-dimensional map can be displayed that an inner side of the range of a depth corresponding to the detail model drawing range from the viewpoint is represented by the detail three-dimensional map, while an area far from that by the simple three-dimensional map.

In this embodiment, the detail three-dimensional map is partially rendered translucent. A synthesis condition-setting unit 24 exerts a function of determining transmittance of the detail three-dimensional map on the basis of the viewpoint, the line-of-sight direction and the like.

By means of the function described above, the navigation device 10 of this embodiment can display a three-dimensional map over the entire display range. Moreover, by limiting drawing of the detail three-dimensional map to the detail model drawing range, the load required for drawing can be reduced. Then, by rendering a part of the detail three-dimensional map translucent and superimposing it in front of the simple three-dimensional map, a sense of discomfort of a portion where the one is switched to the other can be reduced, whereby the appearance can be improved.

Subsequently, processing contents for realizing the aforementioned functions will be described.

### B. Route guidance processing:

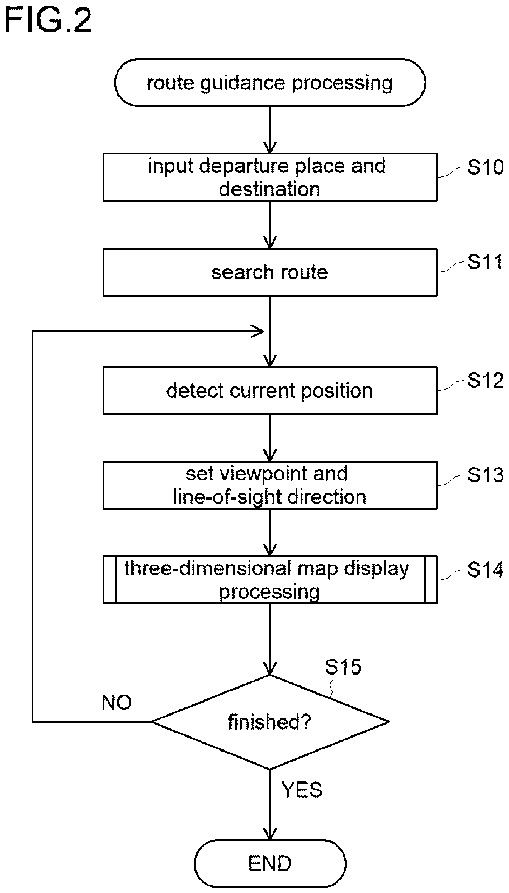

Fig. 2 is a flowchart of the route guidance processing. This is the processing realized by the entire functional blocks illustrated in Fig. 1 and is the processing executed by the CPU of the navigation device 10 in the hardware manner.

When the processing is started, the navigation device 10 inputs designation of a departure place and a destination by a user (Step S10). Then, a route from the designated departure place to the destination is searched (Step S11). The route search can be made by a known method such as Dijkstra method by using the road network data.

When the route search is completed, the navigation device 10 starts the route guidance.

First, the current position of the vehicle is detected (Step S12), and on the basis of that, the viewpoint and the line-of-sight direction for perspective projection are set (Step S13). The setting can be made by various methods. For example, the viewpoint can be a position behind the current position only by a predetermined distance on the route to be guided. Moreover, the line-of-sight direction can be a travelling direction on the route.

The navigation device 10 executes three-dimensional map display processing on the basis of the set viewpoint and line-of-sight direction (Step S14). This processing is to display the three-dimensional map from the viewpoint and the line-of-sight direction on the display by using the simple three-dimensional map and the detail three-dimensional map. Details of processing contents will be described later.

The navigation device 10 repeatedly executes the processing at Step S12 and after described above until the route guidance is finished (Step S15).

### C. Three-dimensional map display processing:

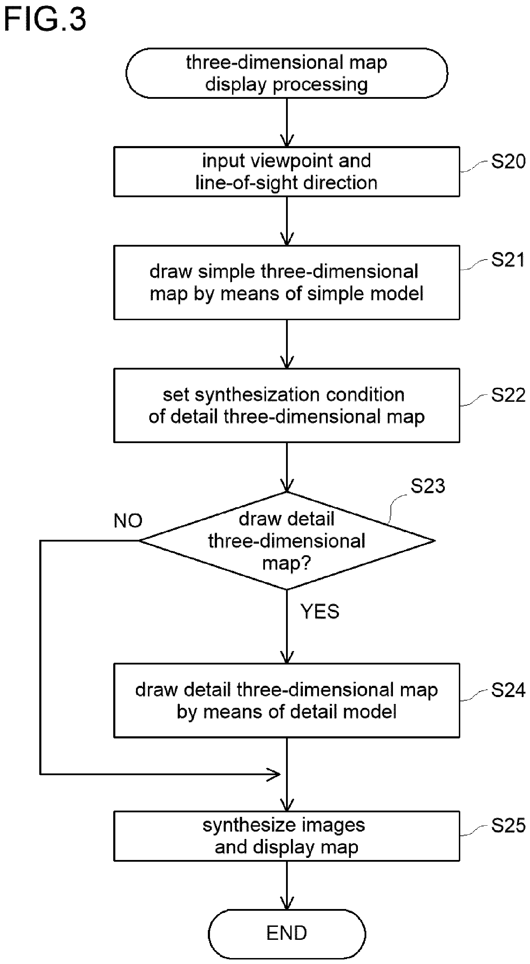

Fig. 3 is a flowchart of the three-dimensional map display processing. This is the processing corresponding to Step S14 in the route guidance processing (Fig. 2) and is the processing realized by the functional block as the three-dimensional map display system incorporated in the navigation device 10, that is, the map display unit 20 and the simple model database 16 and the detail model database 17.

When the processing is started, the navigation device 10 inputs the viewpoint and the line-of-sight direction (Step S20). These are values set at Step S13 in the route guidance processing.

Then, the navigation device 10 draws the simple three-dimensional map by means of the simple model (Step S21). Specifically, it reads the simple model in the range to be drawn on the basis of the viewpoint and the line-of-sight direction and renders it to the perspective projection. At this time, the road is drawn with a line having a thickness according to the road width. For the building, a building frame is translated in the height direction in accordance with the height of the building so as to form a columnar three-dimensional body and this is rendered to the perspective projection. The typical textures such as windows, walls and the like prepared in advance are pasted onto the surface of the building. The simple three-dimensional map of this embodiment is displayed in a more simplified manner at a place farther than a predetermined distance, and the road is drawn by a line, and the building is not rendered three-dimensional but only the building frame is displayed. A display mode of the simple three-dimensional map can employ various modes by considering a display load or appearances.

Subsequently, the navigation device 10 sets a synthesis condition for synthesizing the detail three-dimensional map with the simple three-dimensional map (Step S22).

By leaving Fig. 3 once, here, the synthesis condition will be described.

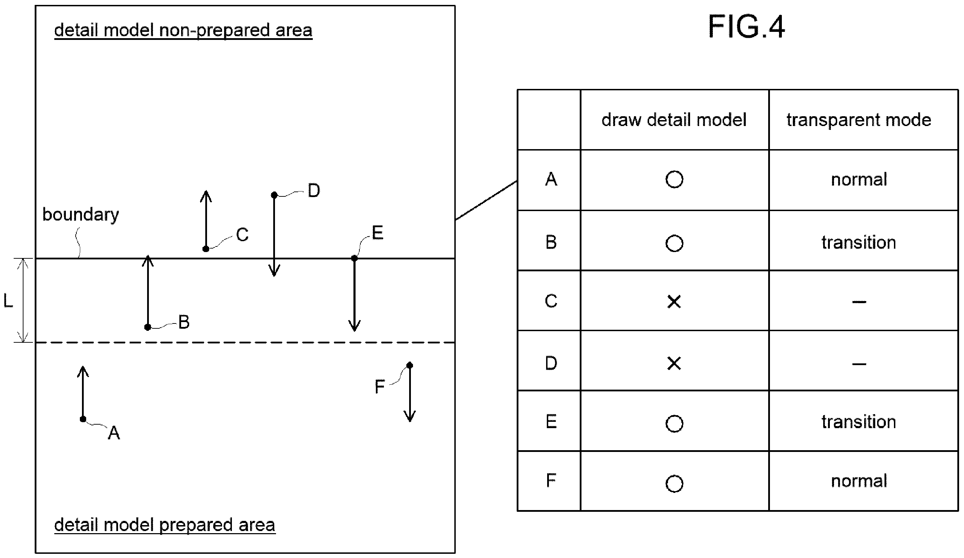

Fig. 4 is an explanatory view illustrating a setting method of the synthesis condition. An upper half on the left side is a detail model non-prepared area, that is, an area where the detail model is not prepared, while a lower half is a detail model prepared area, that is, an area where the detail model is prepared. In the detail model prepared area, a distance L from the boundary of the detail model non-prepared area is a value corresponding to a first predetermined value of the present invention, and is a distance to be a basis for switching the setting of transmittance of the detail model. In this regard, the distance L will be hereinafter called a mode transition standard.

In this embodiment, the synthesis condition changes depending on a vehicle position and its travelling direction.

First, a case A is such a situation that the vehicle position is within the detail model prepared area and is moving toward the boundary. A distance from the vehicle position to the boundary is larger than the mode transition standard L. In such a situation, as illustrated in a table on the right side, the detail model is drawn, and the transparent mode is set to "normal". In the "normal" mode, features in a predetermined range (this is called a transparent drawing range) in the vicinity of the boundary in the detail three-dimensional map are drawn translucently. That is, the detail three-dimensional map is drawn opaquely in a portion of a close-range view close to the viewpoint, while it is drawn translucently in a portion of a distant view. The transmittance may be uniform within the transparent drawing range or may be changed in such a mode that the transmittance is increased as it gets closer to the boundary.

A case B is a state where the vehicle position is within the detail model prepared area and is moving toward the boundary, and a distance from the vehicle position to the boundary is smaller than the mode transition standard L. In such a situation, as illustrated in the table on the right side, the detail model is drawn, and the transparent mode is set to "transition". In the "transparent" mode, the entire detail three-dimensional map is drawn translucently. The transmittance of the detail three-dimensional map becomes higher as the vehicle position gets closer to the boundary. In the "transition" mode, processing of increasing the transmittance of the entirety in addition to the transmittance of the "normal" mode may be applied. In this case, the transmittance of the feature in the transparent drawing range becomes higher than that of the feature in another range in the detail three-dimensional map. Moreover, the "transition" mode may be configured to be applied instead of the "normal" mode. In this case, the transmittance of the entire detail three-dimensional map is uniformly changed whether it is inside or outside of the transparent drawing range.

As long as the vehicle position is within the detail model prepared area, it is handled similarly to the case B even if it gets closer to the boundary. Originally, the detail three-dimensional map is drawn for a feature in the detail model drawing range, that is, in a range of a predetermined distance from the viewpoint as a target. However, if the vehicle position gets closer to the boundary, the detail model located on its front decreases, and thus the detail three-dimensional map can be drawn only for a part in the detail model drawing range. Thus, in the case B, when the distance from the boundary of the detail model non-prepared area to the vehicle position reaches a second predetermined value smaller than the mode transition standard L, the transmittance of the detail three-dimensional map may be increased so that the detail three-dimensional map is not displayed. The second predetermined value set as above is called a non-display standard in some cases. The non-display standard can be set arbitrarily within a range smaller than the mode transition standard L and may be set to a value 0. In this case, it is the setting that the detail three-dimensional map is not displayed when the vehicle position reaches the boundary.

A case C is a state where the vehicle position is within the detail model non-prepared area and is moving in a direction away from the boundary. In such a situation, since the detail model is not present in front of the vehicle position, the detail model is not drawn as illustrated in the table on the right side.

A case D is a state where the vehicle position is within the detail model non-prepared area and is moving toward the boundary. In such a situation, since the detail model is not present immediately in front of the vehicle position, the detail model is not displayed as illustrated in the table on the right side.

A case E is a state where the vehicle position is on the boundary and is moving toward an inside of the detail model prepared area. In such a situation, the detail models are sufficiently prepared in front of the vehicle such that the detail three-dimensional map can be drawn in the detail model drawing range. However, since the detail three-dimensional map is not displayed until immediately in front of that, the transparent mode is set to "transition" in the case E as illustrated in the table on the right side. That is, though the detail three-dimensional map is drawn, the entirety is in a translucent state. The transmittance of the detail three-dimensional map can be set such that the larger the distance from the boundary to the vehicle position is, the lower the transmittance is set. A relationship between the distance from the vehicle position to the boundary and the transmittance may be set to the same as that in the case B.

A case F is a case where the vehicle position is within the detail model prepared area and the distance from the vehicle position to the boundary is larger than the mode transition standard L. In such a case, as illustrated in the display on the right side, the detail model is drawn, and the transparent mode is set to the "normal". Since the mode is "normal", the features in the transparent drawing range are drawn translucently in the detail three-dimensional map.

Summarizing the setting described above, the setting of the drawing and the transparent mode of the detail three-dimensional map is as follows:
As illustrated in the cases A to C, when the vehicle position gets closer to the boundary from the detail model prepared area and enters the detail model non-prepared area, the detail three-dimensional map having been drawn translucently only in the distant view in the transparent mode "normal" moves into the "transition" mode, so that the entirety begins to become transparent and is not displayed at last.

To the contrary, as illustrated in the cases D to F, when the vehicle position gets closer to the boundary from the detail model non-prepared area and enters the detail model prepared area, the detail three-dimensional map which was not displayed at the beginning moves to the "transition" mode and the entirety begins to be drawn translucently and enters the "normal" mode in the end, that is, enters a state drawn translucently only in the distant view.

Returning to Fig. 3, again, the three-dimensional map display processing will be described.

The navigation device 10 determines whether drawing of the detail three-dimensional map is needed or not on the basis of the set synthesis condition (Step S23). As in the cases A, B, E, and F in Fig. 4, when it is determined that drawing of the detail three-dimensional map is needed, the detail model is rendered to the perspective projection, and the detail three-dimensional map is drawn (Step S24). When the detail three-dimensional map is to be drawn, since the detailed detail model is already prepared, there is no need to give a width to the road or to generate a building shape from the building frame as in drawing of the simple three-dimensional map. However, it is also possible to omit the detail model for a part of the buildings or the like and to generate the shape by the method similar to that of the simple three-dimensional map.

In drawing of the detail three-dimensional map, the transmittance set in the synthesis condition is reflected. That is, in the normal mode, the building in the transparent drawing range set in the vicinity of the boundary of the detail model drawing range is drawn translucently. Moreover, in the transition mode, the entire detail three-dimensional map is drawn with the transmittance set in accordance with the viewpoint position or the like. In the transition mode, the detail three-dimensional map may be drawn and then, rendered transparent in synthesis.

When drawing of the detail three-dimensional map is not needed as in the cases C and D in Fig. 4, Step S24 is skipped. However, even in such a case, the detail three-dimensional map may be drawn, and the transmittance corresponding to non-display may be set.

Then, the navigation device 10 synthesizes images of the simple three-dimensional map and the detail three-dimensional map and displays the three-dimensional map (Step S25). When the detail three-dimensional map is not drawn, that is, when Step S24 is skipped, the simple three-dimensional map is displayed on the whole surface.

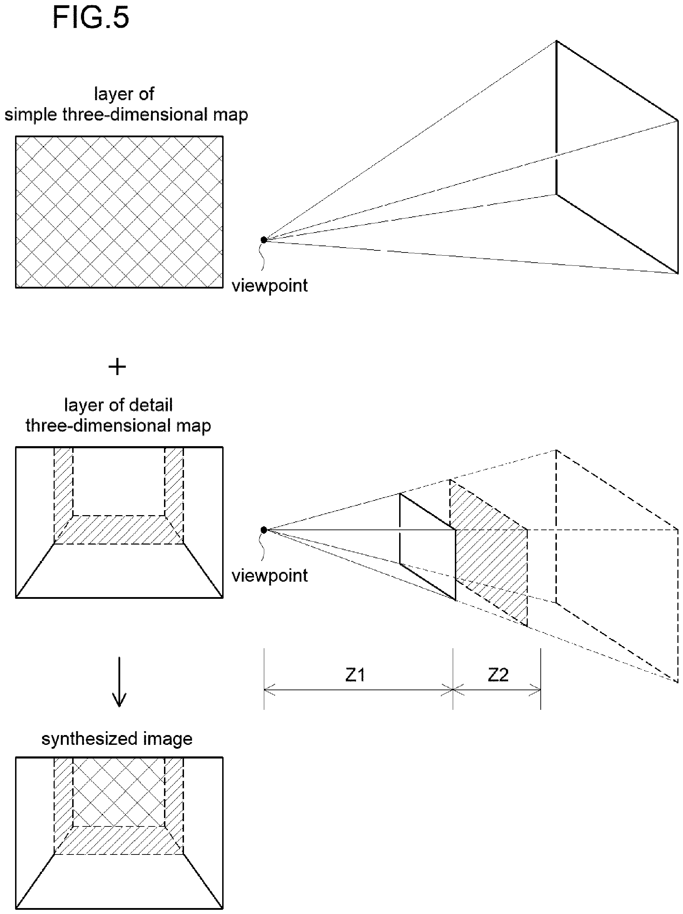

Fig. 5 is an explanatory view illustrating a method of synthesizing images. In this embodiment, the simple three-dimensional map and the detail three-dimensional map are drawn on separate layers. On an upper stage in Fig. 5, a layer of the simple three-dimensional map is illustrated. On this layer, the simple three-dimensional map rendered to perspective projection from the viewpoint is drawn on the entire display area. Hatching in the figure illustrated on the left side in the upper stage indicates a state where the simple three-dimensional map is drawn.

In a middle stage, a layer of the detail three-dimensional map is illustrated. The detail three-dimensional map is drawn on this layer. A range of a distance Z1 + Z2 from the viewpoint in the figure is the detail model drawing range. In the figure, a portion farther than the distance Z2 is drawn by a broken line because it is not a target to be drawn. Moreover, in the transparent drawing range of the distance Z2 from the boundary where the detail three-dimensional map is drawn, the detail three-dimensional map is drawn with the predetermined transmittance. A hatched portion in the figure on the left side in the middle stage indicates a portion where the detail three-dimensional map is drawn in the transparent state. The detail three-dimensional map limits the drawing range to within the distance Z1 + Z2 from the viewpoint and thus, a center portion (portion inside the hatching) is in a transparent state where nothing is drawn.

In a lower stage, a synthesized image is illustrated. As illustrated, the simple three-dimensional map is displayed in the transparent portion at the center of the detail three-dimensional map. Moreover, in a portion where the detail three-dimensional map is drawn in the transparent state, the detail three-dimensional map and the simple three-dimensional map are displayed in a superimposed state. Furthermore, in a portion where the detail three-dimensional map around it is drawn in a non-transparent state, the detail three-dimensional map is displayed. However, when the transmittance of the entire detail three-dimensional map is increased in the transition mode, the detail three-dimensional map and the simple three-dimensional map are displayed in the superimposed state even in the aforementioned non-transparent area.

### D. Display example and effect:

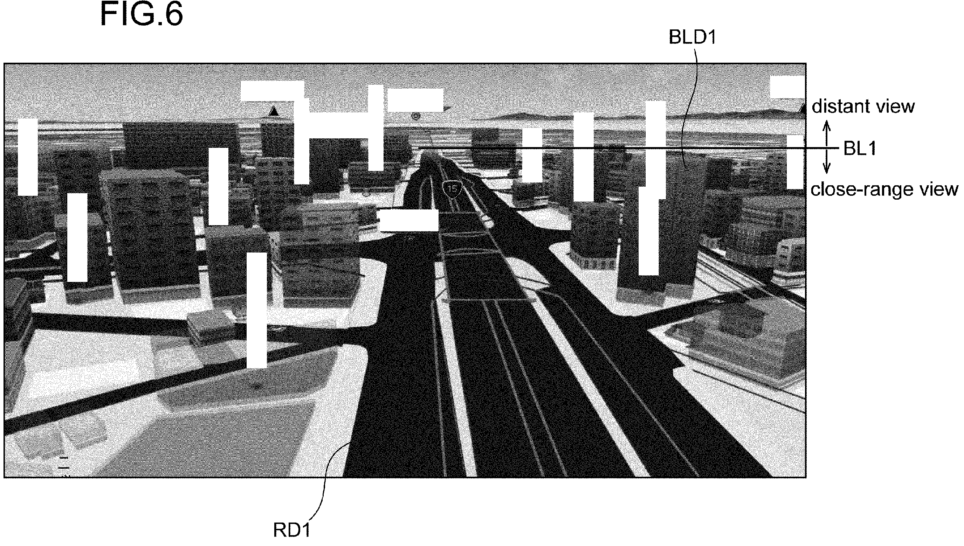

Fig. 6 is an explanatory view illustrating a display example of the simple three-dimensional map. A state is shown where the detail three-dimensional map is not displayed and the simple three-dimensional map is displayed on the entire display area. In this embodiment, the simple three-dimensional map is drawn with a degree of simplification changed in two stages as described above. In a close-range view from the viewpoint to the predetermined distance, a road RD1 is drawn by adding a width added to the line as illustrated, a shape of a building BLD1 is generated by translation of a building frame in the height direction, and typical textures such as a window frame are pasted onto the surface thereof. On the other hand, in a distant view exceeding the predetermined distance from the viewpoint, the road is drawn by a line, and three-dimensional display of the building is omitted. Even in such simplified state, three-dimensional ups and downs of the ground surface are reflected in the drawing of the simple three-dimensional map and as a result, landscapes of mountains far away and the like are drawn loyally.

The close-range view and the distant view are classified on the basis of the distance from the viewpoint in the three-dimensional space, and it is not simply two-dimensional classification that an upper part of a boundary BL1 is the distant view, while a lower part is a close-range view in a drawn map. By means of classification in the three-dimensional space, the buildings included in the close-range view are drawn without unnatural deletion of an upper part or the like even in the vicinity of the boundary BL1.

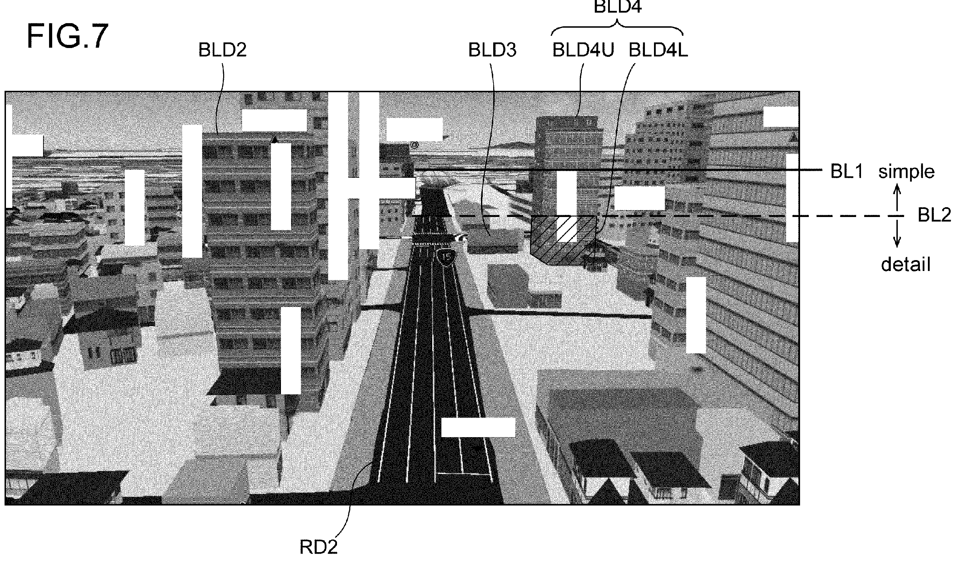

Fig. 7 is an explanatory view illustrating a display example of a three-dimensional map in which the detail three-dimensional map is superimposed. The detail three-dimensional map drawn in the detail model drawing range is displayed on a portion below a boundary BL2 in the figure, while a portion above the boundary BL2 is the simple three-dimensional map. However, the detail model drawing range is defined by a distance from the viewpoint in the three-dimensional space, and the portion below the boundary BL2 in the detail three-dimensional map after drawing is not displayed in a trimmed manner. A building BLD4, for example, is made of a portion BLD4L (hatched portion in the figure) below the boundary BL2 and a portion BLD4U above, but the upper portion BLD4U is drawn also by using the detail model. As described above, by defining the detail model drawing range in the three-dimensional space and by drawing a feature present therein, display without a sense of discomfort like the building BLD4 can be realized.

In the detail three-dimensional map, a building shape is represented with accuracy as in the building BLD2, and since a texture reflecting an actual appearance is used, a highly realistic three-dimensional map can be displayed. However, highly realistic display is not made for all the buildings, but common-place buildings of such a degree that are not to be marks in the map like a building BLD3 may be displayed with simple shapes and textures similar to the simple three-dimensional map.

The detail three-dimensional map is drawn translucently in the vicinity of the boundary BL2.

The simple three-dimensional map is drawn with a road width added in a view closer from the boundary BL1 similarly to the description in Fig. 6, while the road is drawn by a line in a view distant from the boundary BL1.

By superimposing the detail three-dimensional map in front of the simple three-dimensional map drawn as above in display, the entire display area can be represented by a three-dimensional map with a relatively light drawing load.

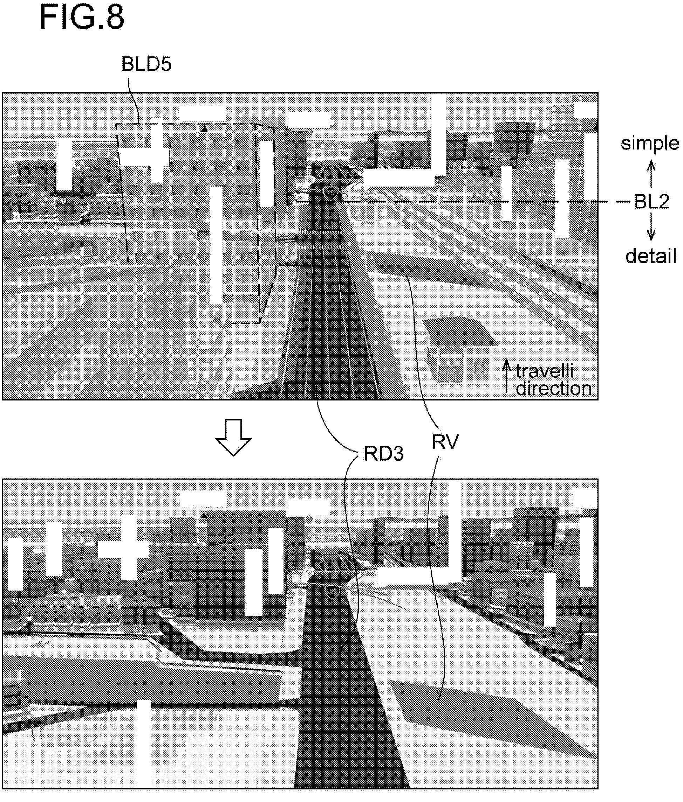

Fig. 8 is an explanatory view illustrating a transition screen when an area where the detail model is prepared is left. On an upper figure, a three-dimensional map in a state where the vehicle position is getting closer to the boundary of the detail model prepared area is illustrated. A portion closer from the boundary BL2 is drawn by the detail three-dimensional map and a distant portion by the simple three-dimensional map. However, the transparent mode is set to the "transition" mode, and the detail three-dimensional map is entirely drawn translucently. Through a building BLD5, for example, a river RV located behind it can be seen.

On a lower figure, a state where the vehicle position has further got closer to the boundary is illustrated. It is known from a positional relationship of a road RD3 and the river RV that a change of the vehicle position as compared with the upper figure is slight and that it is located at a position where the building BLD5 could have been drawn as the detail three-dimensional map. In this embodiment, even in such a situation, the transmittance of the detail three-dimensional map is sufficiently increased so as not to be displayed at a point where the vehicle position gets closer to the boundary of the detail model prepared area, and a detail model which can cover the detail model drawing range cannot be obtained any more. Therefore, in the state on the lower figure, the detail three-dimensional map is not displayed but only the simple three-dimensional map is displayed.

In this embodiment, since transition to the lower figure is made while the detail three-dimensional map is transparently displayed, the display can be changed without a sense of discomfort.

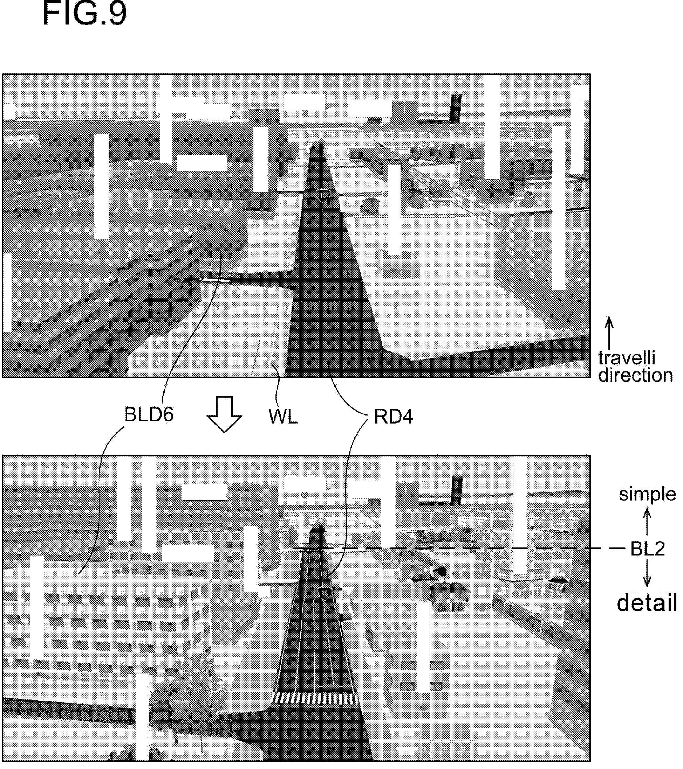

Fig. 9 is an explanatory view illustrating a transition screen when the vehicle position enters an area where the detail model is prepared. An upper figure illustrates a state immediately after the vehicle position advances into the detail model prepared area from the detail model non-prepared area. In this state, the detail three-dimensional map is superimposed on the simple three-dimensional map in display, and the transparent state is the transition mode. That is, the detail three-dimensional map is entirely drawn translucently. By looking at a building BLD6, for example, it is known that the building is translucent. Moreover, a road in the detail three-dimensional map on which a white line WL is drawn and a road RD4 in the simple three-dimensional map on which no white line is drawn are superimposed, and the white line WL is displayed translucently.

A lower figure illustrates a state where the vehicle position further advances into the detail model prepared area. By looking at arrangement of the building BLD6, it is known that movement from the upper figure is slight. In this state, the transparent state is the normal mode. Therefore, in a range in front of the boundary BL2, the detail three-dimensional map is drawn translucently, while in a distant range, the simple three-dimensional map is drawn. The road RD4 has the white line drawn in front of the boundary BL2, while it is drawn in a form the white line is omitted in a distant view.

Similarly to illustration in Fig. 8, since transition to the lower figure is made while the detail three-dimensional map is transparently displayed, the display can be changed without a sense of discomfort.

As described above, according to the three-dimensional map display system of this embodiment, by superimposing the simple three-dimensional map and the detail three-dimensional map in display, the three-dimensional map can be displayed on the entire display area with a relatively light load.

Moreover, at this time, by displaying the detail three-dimensional map translucently in the vicinity of the detail model drawing range, the simple three-dimensional map and the detail three-dimensional map can be integrated without a sense of discomfort.

Furthermore, by providing the transition mode displaying the entire detail three-dimensional map translucently in the vicinity of the boundary of the detail three-dimensional model prepared area, transition between the display using both the simple three-dimensional map and the detail three-dimensional map and the display only by the simple three-dimensional map can be made without a sense of discomfort.

In this embodiment, it is not necessary to include all the aforementioned various features, but a part thereof may be omitted or combined as appropriate in configuration, and various variations can be employed as illustrated below.

### (1) Variation of image synthesizing method:

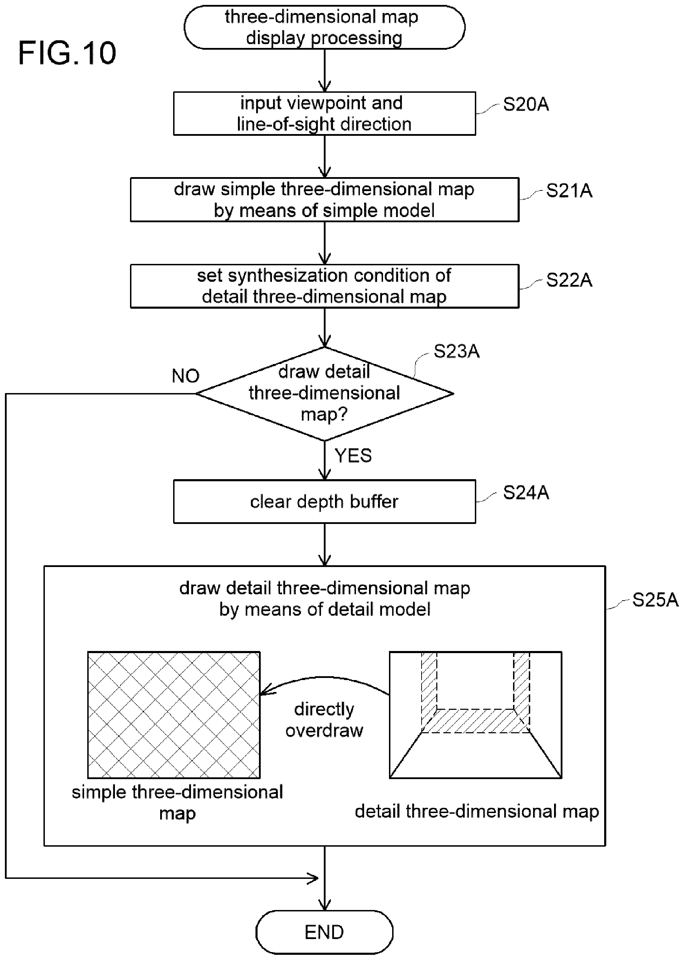

Fig. 10 is a flowchart of the three-dimensional map display processing as a variation. This is the processing replacing Fig. 3 in the embodiment.

When the processing is started, the navigation device 10 inputs the viewpoint and the line-of-sight direction (Step S20A) similarly to the embodiment and draws the simple three-dimensional map by means of the simple model (Step S21A). Moreover, it sets a synthesis condition of the detail three-dimensional map (Step S22A).

Then, when it is determined that the detail three-dimensional map is to be drawn (Step S23A), the depth buffer is cleared (Step S24A), and then the detail three-dimensional map is drawn by means of the detail model (Step S25A). The depth buffer is a buffer storing a distance from the viewpoint to each point in the drawn simple three-dimensional map, that is, a depth. In three-dimensional graphics, a three-dimensional relationship between front and rear can be determined by storing the depth of each point as described above, and the hidden line processing can be realized.

However, in the variation, the depth buffer is initialized once before the detail three-dimensional map is drawn. By performing as above, the drawn simple three-dimensional map becomes only a two-dimensional background image. Therefore, by subsequently drawing the detail three-dimensional map directly on the simple three-dimensional map, the three-dimensional map displaying the detail three-dimensional map in front can be completed.

In the figure, a state of drawing of the detail three-dimensional map is illustrated. The simple three-dimensional map with the depth buffer cleared is illustrated on the left side. If only the detail three-dimensional map is drawn, it would be an image as illustrated on the right side, but in the variation, this does not have to be drawn on a layer separate from that of the simple three-dimensional map but can be directly overdrawn.

By such a method, too, the three-dimensional map illustrated in the embodiment can be also displayed.

### (2) Other variations:

In the embodiments, the example in which there is the detail three-dimensional model prepared area and the detail three-dimensional model non-prepared area has been illustrated. It may be assumed that the detail three-dimensional model is prepared for the entire area. In such a case, since there is no "boundary" of the detail three-dimensional model prepared area, the "normal" mode may be used at all times as the transparent mode may use.

The extent and shapes of the detail model drawing range and the transparent drawing range described in the embodiments do not have to be fixed but may be changed depending on a region or the like.

In the embodiments, the case where two types of the map databases, that is, the simple model and the detail model are used has been exemplified. However, three or more types of map databases may be used.

The portions of the embodiments configured in the hardware manner can be also configured in the software manner, and vice versa.

### [Industrial Applicability]

The present invention can be utilized for generating a texture representing an appearance of a feature.

### [Reference Numerals]

- 10: navigation device
- 11: position detection unit
- 12: command input unit
- 13: map display parameter setting unit
- 14: route search unit
- 15: road network database
- 16: simple model database
- 17: detail model database
- 20: map display unit
- 21: image-synthesizing unit
- 22: simple three-dimensional map drawing unit
- 23: detail three-dimensional map drawing unit
- 24: synthesis condition-setting unit

## Claims

1. A three-dimensional map display system for displaying a three-dimensional map, comprising:
a detail model database storing a detail model which is map data with high accuracy of features included in the map;
a simple model database storing a simple model which is map data with accuracy of the features included in the map lower than accuracy in the detail model;
a map display unit for displaying the three-dimensional map seen from a designated viewpoint and a line-of-sight direction by referring to the detail model database and the simple model database, wherein
the map display unit comprises:
a detail three-dimensional map drawing unit for assuming a range within a predetermined distance in the line-of-sight direction from the viewpoint is a detail model drawing range, and drawing by using the detail model a detail three-dimensional map, which is a three-dimensional map with high accuracy of the features, in the detail model drawing range;
a simple three-dimensional map drawing unit for drawing by using the simple model a simple three-dimensional map, which is a three-dimensional map with accuracy of the features lower than accuracy of the detail three-dimensional map, in a range set to include a range where the detail three-dimensional map is not drawn; and
an image-synthesizing unit for superimposing the detail three-dimensional in front of the simple three-dimensional map, and displaying both.

2. The three-dimensional map display system according to claim 1, wherein:
the detail three-dimensional map drawing unit draws the detail three-dimensional map in a translucent manner within a transparent drawing range which is set in the vicinity of a boundary of the detail model drawing range; and
the simple three-dimensional map drawing unit draws the simple three-dimensional map so as to include the transparent drawing range.

3. The three-dimensional map display system according to claim 1 or 2, wherein:
the simple three-dimensional map drawing unit draws the simple three-dimensional map on the entire display area of the three-dimensional map.

4. The three-dimensional map display system according to any one of claims 1 to 3, wherein:
a detail model prepared area where the detail model is prepared and a detail model non-prepared area where the detail model is not prepared are mixed.

5. The three-dimensional map display system according to claim 4, wherein:
when a distance from the viewpoint in the line-of-sight direction to a boundary of the detail model prepared area is less than or equal to a first predetermined value, the detail three-dimensional map drawing unit or the image-synthesizing unit displays the entire detail three-dimensional map with transmittance increased as the viewpoint gets closer to the boundary.

6. The three-dimensional map display system according to claim 4 or 5, wherein:
the detail three-dimensional map drawing unit or the image-synthesizing unit does not display the detail three-dimensional map when the distance from the viewpoint in the line-of-sight direction to the boundary of the detail model prepared area is less than or equal to a second predetermined value smaller than the first predetermined value.

7. The three-dimensional map display system according to any one of claims 1 to 6, wherein:
the detail three-dimensional map drawing unit and the simple three-dimensional map drawing unit draw the detail three-dimensional map and the simple three-dimensional map on different layers; and
the image-synthesizing unit arranges the layer on which the detail three-dimensional map is drawn in front of the layer on which the simple three-dimensional map is drawn and performs synthesis.

8. The three-dimensional map display system according to any one of claims 1 to 6, wherein:
the image-synthesizing unit:
allows the simple three-dimensional map drawing unit to draw the simple three-dimensional map;
deletes a depth buffer storing a distance from the viewpoint to each point in the simple three-dimensional map; and
then, allows the detail three-dimensional map drawing unit to draw the detail three-dimensional map.

9. A method of displaying a three-dimensional map in which the three-dimensional map is displayed by means of a computer, wherein
the method comprises, as steps to be executed by the computer, steps of:
(a) referring to a detail model database storing a detail model which is map data with high accuracy of features included in a map;
(b) referring to a simple model database storing a simple model which is map data with accuracy of the features included in the map lower than accuracy in the detail model;
(c) displaying the three-dimensional map seen from a designated viewpoint and a line-of-sight direction by referring to the detail model database and the simple model database,
and wherein the step (c) comprises:
(c1) assuming a range within a predetermined distance in a line-of-sight direction from the viewpoint is a detail model drawing range, and drawing by using the detail model a detail three-dimensional map, which is a three-dimensional map with high accuracy of the features, in the detail model drawing range;
(c2) drawing by using the simple model a simple three-dimensional map, which is a three-dimensional map with accuracy of the features lower than accuracy of the detail three-dimensional map, in a range set to include a range where the detail three-dimensional map is not drawn; and
(c3) superimposing the detail three-dimensional map superimposed in front of the simple three-dimensional map, and displaying both.

10. A computer program for allowing a computer to display a three-dimensional map, wherein
the computer program allows the computer to achieve functions of:
referring to a detail model database storing a detail model which is map data with high accuracy of features included in a map;
referring to a simple model database storing a simple model which is map data with accuracy of the features included in the map lower than accuracy in the detail model;
displaying the three-dimensional map seen from a designated viewpoint and a line-of-sight direction by referring to the detail model database and the simple model database,
and wherein, as the displaying function, the computer program allows the computer to achieve functions of:
assuming a range within a predetermined distance in a line-of-sight direction from the viewpoint is a detail model drawing range, and drawing by using the detail model a detail three-dimensional map, which is a three-dimensional map with high accuracy of the features, in the detail model drawing range;
drawing by using the simple model a simple three-dimensional map, which is a three-dimensional map with accuracy of the features lower than accuracy of the detail three-dimensional map, in a range set to include a range where the detail three-dimensional map is not drawn; and
superimposing the detail three-dimensional map superimposed in front of the simple three-dimensional map, and displaying both.
